# EUROPEAN PATENT APPLICATION

(11) **EP 3 091 310 A1**
(43) Date of publication of application: **09.11.2016**
(21) Application number: 14883151.4
(22) Date of filing: 24.12.2014
(51) Int. Cl.: F25B 1/00, F24F 11/02, F25B 5/02, F25B 13/00, F25B 43/02

(54) **MULTI-SPLIT AIR CONDITIONER**

(30) Priority: 20.02.2014 JP 2014030829
(71) Applicant: Mitsubishi Heavy Industries, Ltd., Tokyo 108-8215 (JP)
(72) Inventor: KATO, Takahiro, Tokyo 108-8215 (JP); YOSHIDA, Junichi, Tokyo 108-8215 (JP); NAKANO, Gaku, Tokyo 108-8215 (JP)
(74) Representative: Intès, Didier Gérard André
(86) International application number: PCT/JP2014/084023
(87) International publication number: WO 2015/125397

(57) **Abstract**

The purpose of the invention is to provide a multi-split air conditioner that can reliably eliminate the situation of repeated failure in oil return control even at high outdoor temperature for which a protective function operates. A multi-split air conditioner (1) includes one outdoor unit (2), a plurality of indoor units (3A, 3B) connected in parallel to the outdoor unit (2), and an oil return control unit (40) that performs an oil return operation when an oil return condition is met by controlling the lift of an expansion valve (31) and the speed of a compressor (10) in a cooling cycle, wherein the oil return control unit (40) includes load reducing means (42, 42A) for performing the oil return operation after reducing the load by setting at least one of the thermo-ON indoor units (3A, 3B) to thermo OFF when the compressor (10) is in operation at a speed lower than the required oil return speed during the oil return operation.

## Description

### Technical Field

The present invention relates to a multi-split air conditioner including an oil return control unit that collects lubricating oil that has flowed to a refrigerant circuit side and performs an oil return operation to maintain a predetermined amount of oil in a compressor.

### Background Art

In a multi-split air conditioner provided for air conditioning a building or the like, a length of refrigerant piping that connects a plurality of indoor units and an outdoor unit is long. As a result, while the air conditioner is operating, lubricating oil that has flowed with the coolant from a compressor to a refrigerant circuit side readily accumulates on the refrigerant circuit side, making the air conditioner side prone to oil deficiency. Hence, in such an air conditioner, in order to collect the oil that has flowed from the compressor to the refrigerant circuit side, an oil return operation is performed either every predetermined time period by aggregating an operation time of the air conditioner, or upon detection of a predetermined amount of oil outflow from the compressor by calculating the outflow amount.

The oil return operation is generally performed by setting a refrigerant cycle to a cooling cycle, increasing a lift amount of an electronic expansion valve for cooling on the indoor unit side, increasing a speed of the compressor to increase a circulation amount and a flow rate of the coolant, and performing an operation similar to a so-called liquid-back operation. As a result, the oil accumulated in the refrigerant circuit of a heat exchanger, refrigerant piping, and the like is flushed along with the coolant to the compressor side and collected in the compressor (refer to Patent Documents 1 and 2, for example).

Patent Document 1 discloses a multi-split air conditioner that effectively and efficiently collects oil by performing an oil collection operation at the next startup when a stoppage time of the compressor is detected and the continual or aggregated stoppage time is greater than or equal to a predetermined time.

On the other hand, Patent Document 2 discloses a multi-split air conditioner that, when the outdoor temperature is high, forcibly performs an oil return operation in advance when an outside air temperature rises to a set value or higher to eliminate failure in oil return operation over an extended period of time caused by high pressure protection or the like.

### Citation List

### Patent Literature

Patent Literature 1: Japanese Patent No. 3418287B
Patent Literature 2: Japanese Unexamined Patent Application Publication No. 2011-149659A

### Summary of Invention

### Technical Problem

As described above, in a case where the outdoor unit is installed and used in a location where the outdoor temperature abnormally rises or the area easily fills with heat, when oil return control is performed and the speed of the compressor rises, a coolant pressure may exceed a set value of a high pressure switch, causing oil return control to end in failure due to protection control or the like. One effective countermeasure is to eliminate failure in oil return control over an extended period of time by forcibly performing the oil return operation in advance, as in Patent Document 2.

However, continual operation of the air conditioner over an extended period of time may result in performance of oil return control. In this case, the problem arises that, at high outdoor temperature, oil return control is performed from an operational state in which the speed of the compressor is lower than a required oil return speed due to high pressure protection control, current protection control, or the like, causing the oil return control to end in failure without the compressor speed reaching the required oil return speed. After a short period of time, the oil return control is retried once again, resulting in a situation of repeated failure in oil return control. This leads to a decrease in efficiency as well as a decrease in reliability and comfort, and the like.

In view of such circumstances, an object of the present invention is to provide a multi-split air conditioner that can reliably eliminate a situation of repeated failure in oil return control even at high outdoor temperature for which a protective function operates.

### Solution to Problem

In order to solve the above-described problem, the multi-split air conditioner of the present invention provides the following means.

That is, a multi-split air conditioner according to a first aspect of the present invention includes one outdoor unit; a plurality of indoor units connected in parallel to the outdoor unit; and an oil return control unit that performs an oil return operation when an oil return condition is met by controlling a lift amount of an expansion valve and a speed of a compressor in a cooling cycle. In such a multi-split air conditioner, the oil return control unit includes load reducing means for performing the oil return operation after reducing a load by setting at least one of the thermo-ON indoor units to thermo OFF when the compressor is in operation at a speed lower than a required oil return speed during the oil return operation.

According to the above-described aspect, the oil return control unit includes the load reducing means for performing the oil return operation after reducing the load by setting at least one of the thermo-ON indoor units to thermo OFF when the compressor is in operation at a speed lower than the required oil return speed during the oil return operation. Therefore, even when the compressor is in operation at a speed lower than the required oil return speed due to high pressure protection control, current protection control, or the like at high outdoor temperature, causing the oil return control to be performed in a high load state as a system, the compressor speed to not reach the required oil return speed due to protection control, and thus oil return control to be repeated as a result of failure in oil return control, it is possible to increase the compressor speed to exceed the required oil return speed and achieve oil return control by reducing the load by setting at least one of the thermo-ON indoor units to thermo OFF by the load reducing means. This makes it possible to avoid the situation of repeated oil return control caused by failure in oil return control, improve operation efficiency and reliability as well as suppressing deterioration of the air conditioning feeling.

Furthermore, in the above-described multi-split air conditioner, the load reducing means is configured to start the oil return operation after reducing the load by setting at least one of the thermo-ON indoor units to thermo OFF to increase the compressor speed to the required oil return speed or higher when the compressor speed is lower than the required oil return speed due to protection control or the like at the start of the oil return operation.

According to the above-described configuration, the load reducing means is configured to start the oil return operation after reducing the load by setting at least one of the thermo-ON indoor units to thermo OFF to increase the compressor speed to the required oil return speed or higher when the compressor speed is lower than the required oil return speed due to protection control or the like at the start of the oil return operation. Therefore, even when the oil return operation is to be started in an operational state in which the compressor speed is lower than the required oil return speed due to high pressure protection control, current protection control, or the like, it is possible to perform the oil return control after reducing the load by setting at least one of the thermo-ON indoor units to thermo OFF to increase the compressor speed to the required oil return speed or higher by the load reducing means. This allows the compressor speed to reliably reach the required oil return speed, making it possible to maintain the coolant flow rate required to flush the oil and perform the oil return operation, and thus avoid or reduce repeated oil return control caused by failure in oil return control.

Furthermore, in the above-described multi-split air conditioner, the load reducing means is configured to retry the oil return operation after reducing the load by setting at least one of the thermo-ON indoor units to thermo OFF when the compressor speed fails to reach the required oil return speed during the oil return operation.

According to the above-described configuration, the load reducing means is configured to retry the oil return operation after reducing the load by setting at least one of the thermo-ON indoor units to thermo OFF when the compressor speed fails to reach the required oil return speed during the oil return operation. Therefore, even when an oil return operation is started in an operational state in which the compressor speed is low due to high pressure protection control, current protection control, or the like at high outdoor temperature, causing the oil return operation to end without the compressor speed reaching the required oil return speed and thus oil return control to end in failure, it is possible to perform the retry of the oil return operation after reducing the load by setting at least one of the thermo-ON indoor units to thermo OFF by the load reducing means. This allows the compressor speed to reach the required oil return speed, making it possible to perform the oil return control during a retry of the oil return operation and thus suppress repeated oil return control caused by failure in oil return control.

Furthermore, in any one of the multi-split air conditioners described above, the load reducing means is configured to perform the retry of the oil return operation after gradually reducing the load by setting the thermo-ON indoor units to thermo OFF one by one when at least one of the thermo-ON indoor units is set to thermo OFF.

According to the above-described configuration, the load reducing means is configured to perform the retry of the oil return operation after gradually reducing the load by setting the thermo-ON indoor units to thermo OFF one by one when at least one of the thermo-ON indoor units is set to thermo OFF. Therefore, when the compressor speed fails to reach the required oil return speed and the retry of the oil return operation is performed after setting at least one of the thermo-ON indoor units to thermo OFF, it is possible to achieve oil return control by gradually reducing the load by setting of the thermo-ON indoor units to thermo OFF one by one to increase the compressor speed to the required oil return speed while minimizing the number of the indoor units to be set to thermo OFF. This makes it possible to prevent useless repeated oil return control while suppressing deterioration in the air conditioning feeling.

Furthermore, in any one of the multi-split air conditioners described above, the load reducing means is configured to perform the retry of the oil return operation after gradually reducing the load by setting the thermo-ON indoor units to thermo OFF at a fixed rate when at least one of the thermo-ON indoor units is set to thermo OFF.

According to the above-described configuration, the load reducing means is configured to perform the retry of the oil return operation after gradually reducing the load by setting the thermo-ON indoor units to thermo OFF at a fixed rate when at least one of the thermo-ON indoor units is set to thermo OFF. Therefore, when the compressor speed fails to reach the required oil return speed and the retry of the oil return operation is performed after setting at least one of the thermo-ON indoor units to thermo OFF, it is possible to achieve oil return control by gradually reducing the load by setting the thermo-ON indoor units to thermo OFF at a fixed rate to increase the compressor speed to the required oil return speed in a lesser number of retries. This makes it possible to prevent useless repeated oil return control while minimizing the number of oil return control retries.

Furthermore, in any one of the multi-split air conditioners described above, the retry of the oil return operation is performed after reducing the load by setting at least one of the indoor units to thermo OFF and performing a regular cooling operation for a certain period of time to stabilize the operation.

According to the above-described configuration, the retry of the oil return operation is performed after reducing the load by setting at least one of the indoor units to thermo OFF and performing a regular cooling operation for a certain period of time to stabilize the operation. Therefore, when at least one of the thermo-ON indoor units is to be forcibly set to thermo OFF and the oil return operation is to be retried in the next operation, the lifts of indoor-side expansion valves require stabilization and thus the regular cooling operation is performed during that period of about five minutes, making it possible to stabilize the lifts of the expansion valves and, as a result, retry of the oil return operation can be smoothly performed.

### Advantageous Effects of Invention

According to the present invention, even when the compressor is in operation at a speed lower than the required oil return speed due to protection control or the like, the oil return control is to be performed in a high load state as a system, and the compressor speed fails to reach the required oil return speed due to the protection control, causing the oil return control to be repeated as a result of failure in oil return control. However, the load reducing means reduces the load by setting at least one of the thermo-ON indoor units to thermo OFF, allowing the compressor speed to increase to exceed the required oil return speed and oil return control to be achieved. This makes it possible to avoid a situation of repeated oil return control caused by failure in oil return control, improve operation efficiency, and ensure reliability as well as comfort.

### Brief Description of Drawings

FIG. 1 is a diagram of a refrigerant circuit of a multi-split air conditioner according to a first embodiment of the present invention.
FIG. 2 is flowchart of oil return control of the multi-split air conditioner illustrated in FIG. 1.
FIG. 3 is a flowchart of the oil return control according to a second embodiment of the present invention.
FIG. 4 is a control flowchart of a modification of the oil return control flow illustrated in FIG. 3.

### Description of Embodiments

Embodiments of the present invention will be described below with reference to the attached drawings.

### [First Embodiment]

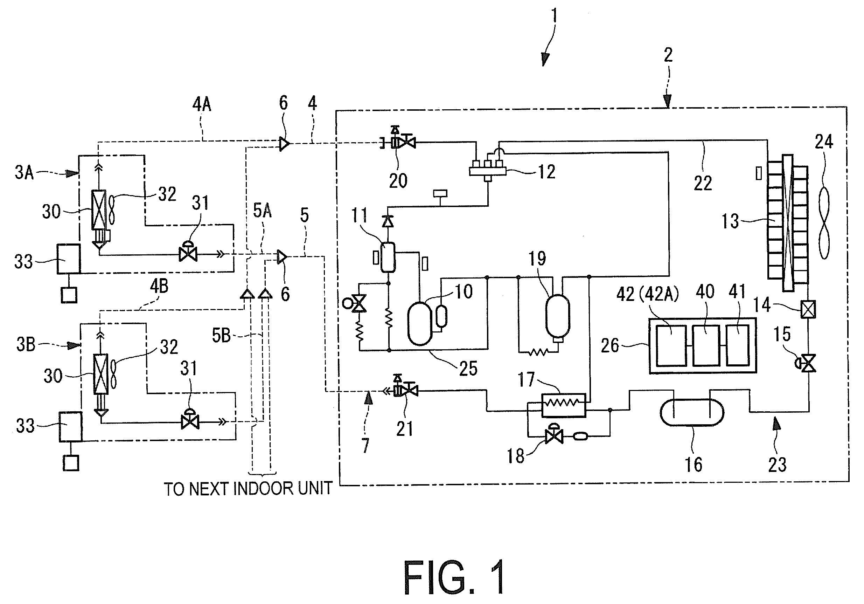

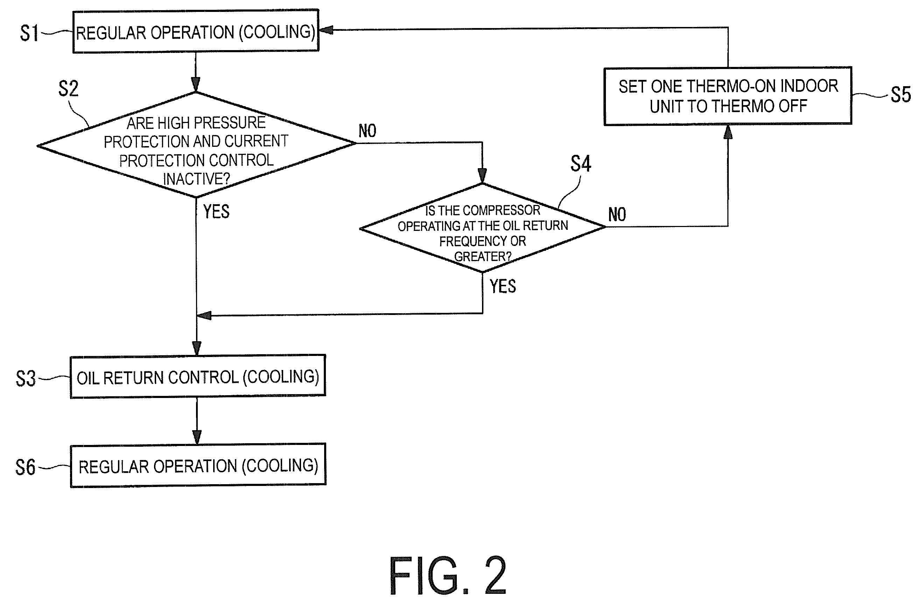

A first embodiment of the present invention will be described below, using FIGS. 1 and 2.

FIG. 1 is a diagram of a refrigerant circuit of a multi-split air conditioner according to the first embodiment of the present invention, and FIG. 2 is flowchart of oil return control of the multi-split air conditioner.

A multi-split air conditioner 1 includes one outdoor unit 2 and a plurality of indoor units 3A, 3B connected in parallel to the outdoor unit 2. The plurality of indoor units 3A, 3B are connected to each other in parallel via branching devices 6 between a gas-side piping 4 and a liquid-side piping 5 connected to the outdoor unit 2.

The outdoor unit 2 includes an inverter-driven compressor 10 that compresses a coolant, an oil separator 11 that separates a lubricating oil from a refrigerant gas, a four-way selector valve 12 that selects a circulation direction of the coolant, an outdoor heat exchanger 13 that causes the coolant and outside air to exchange heat, a sub-cooling coil 14 integrally formed with the outdoor heat exchanger 13, an electronic expansion valve for heating (EEVH) 15, a receiver 16 that stores a liquid refrigerant, a sub-cooling heat exchanger 17 that applies supercooling to the liquid refrigerant, an electronic expansion valve for sub-cooling (EEVSC) 18 that controls a refrigerant amount to be branched to the sub-cooling heat exchanger 17, an accumulator 19 that separates a liquid portion from the refrigerant gas to be suctioned into the compressor 10 and allows only a gas portion to be suctioned toward the compressor 10, a gas-side operation valve 20, and a liquid-side operation valve 21.

Each of the above-described devices on the outdoor unit 2 side is sequentially connected via a refrigerant piping 22, and constitutes a known outdoor refrigerant circuit 23. Further, an outdoor fan 24 that blows outside air to the outdoor heat exchanger 13 is provided to the outdoor unit 2. Furthermore, an oil return circuit 25 for returning the lubricating oil separated from discharged refrigerant gas in the oil separator 11 to the compressor 10 side in predetermined amounts is provided between a suction piping of the compressor 10 and the oil separator 11.

The gas-side piping 4 and the liquid-side piping 5 are refrigerant piping connected to the gas-side operation valve 20 and the liquid-side operation valve 21 of the outdoor unit 2, and lengths of the gas-side piping 4 and the liquid-side piping 5 are set as appropriate in accordance with a distance between the outdoor unit 2 and the plurality of indoor units 3A, 3B connected to the outdoor unit 2 during onsite installation work. A plurality of the branching devices 6 are provided midway on the gas-side piping 4 and the liquid-side piping 5, and an appropriate number of the indoor units 3A, 3B are connected via the branching devices 6. As a result, a refrigerant cycle (refrigerant circuit) 7 of one closed system is configured.

The indoor units 3A, 3B each include an indoor heat exchanger 30 that causes inside air and the coolant to exchange heat to cool or heat the inside air and provides the inside air for indoor air conditioning, an electronic expansion valve for cooling (EEVC) 31, an indoor fan 32 that circulates inside air via the indoor heat exchanger 30, and an indoor controller 33. The indoor units 3A, 3B are connected to the branching devices 6 via branched gas-side piping 4A, 4B and branched liquid-side piping 5A, 5B on the indoor side. Such a multi-split air conditioner 1 configured as described above is known.

In the multi-split air conditioner 1 described above, the cooling operation is performed as follows.

Lubricating oil contained in high-temperature, high-pressure refrigerant gas, having been compressed and discharged by the compressor 10, is separated by the oil separator 11. Subsequently, the refrigerant gas is circulated toward the outdoor heat exchanger 13 by the four-way selector valve 12, and subjected to heat exchange with the outside air blown by the outdoor fan 24 to be condensed and liquefied in the outdoor heat exchanger 13. This liquid refrigerant is further cooled by the sub-cooling coil 14, and subsequently passed through the electronic expansion valve for heating 15 and temporarily stored in the receiver 16.

The liquid refrigerant adjusted in circulation amount by the receiver 16 is partially diverted from the liquid refrigerant piping in the process of flowing through the liquid refrigerant piping side via the sub-cooling heat exchanger 17, and subjected to heat exchange with coolant adiabatically expanded by the electronic expansion valve for sub-cooling (EEVSC) 18, thereby imparting the degree of supercooling to the liquid refrigerant. This liquid refrigerant is introduced from the outdoor unit 2 to the liquid-side piping 5 via the liquid-side operation valve 21, and diverted to the branched liquid-side piping 5A, 5B of each of the indoor units 3A, 3B via the branching devices 6.

The liquid refrigerant diverted to the branched liquid-side piping 5A, 5B flows into the indoor units 3A, 3B, is adiabatically expanded by the electronic expansion valve for cooling (EEVC) 31 to form a gas-liquid mixed-phase flow, and is introduced into the indoor heat exchanger 30. In the indoor heat exchanger 30, heat is exchanged between the coolant and the inside air circulated by the indoor fan 32. The inside air is thus cooled and provided for indoor cooling. On the other hand, the coolant is gasified, flows to the branching device 6 via the branched gas-side piping 4A, 4B, and merges with the refrigerant gas from other indoor units in the gas-side piping 4.

The refrigerant gas merged in the gas-side piping 4 returns once again to the outdoor unit 2, merges with the refrigerant gas from the electronic expansion valve for sub-cooling 17 via the gas-side operation valve 20 and the four-way selector valve 12, and is subsequently introduced into the accumulator 19. In the accumulator 19, the liquid portion contained in the refrigerant gas is separated, and only the gas portion is suctioned into the compressor 10. This coolant is once again compressed in the compressor 10. The cooling operation is performed by repeating the cycle described so far.

On the other hand, the heating operation is performed as follows.

Lubricating oil contained in high-temperature, high-pressure refrigerant gas, having been compressed and discharged by the compressor 10, is separated by the oil separator 11. The lubricating oil is then circulated to the gas-side operation valve 20 side via the four-way selector valve 12. This high-pressure gas coolant is led out from the outdoor unit 2 via the gas-side operation valve 20 and the gas-side piping 4, and introduced into the plurality of indoor units 3A, 3B via the branching devices 6 and the branched gas-side piping 4A, 4B on the indoor side.

The high-temperature, high-pressure refrigerant gas introduced into the indoor units 3A, 3B is subjected to heat exchange with the inside air circulated via the indoor fan 32 by the indoor heat exchanger 30, and the inside air thus heated is blown into a room and used for heating. On the other hand, the coolant condensed and liquefied by the indoor heat exchanger 30 flows to the branching device 6 via the electronic expansion valve for cooling (EEVC) 31 and the branched liquid-side piping 5A, 5B, is merged with the coolant from other indoor units, and is returned to the outdoor unit 2 via the liquid-side piping 5. Note that, in each of the indoor units 3A, 3B during heating, the lift amount of the electronic expansion valve for cooling (EEVC) 31 is controlled via the indoor controller 33 so that a coolant supercooling degree or a coolant outlet temperature (hereinafter referred to as "heat exchange outlet temperature") of the indoor heat exchanger 30 that functions as a condenser becomes a control target value.

The coolant that has returned to the outdoor unit 2 flows to the sub-cooling heat exchanger 17 via the liquid-side operation valve 21, and is subjected to supercooling in the same manner as during cooling, introduced into the receiver 16, and adjusted in circulation amount by being temporarily stored. This liquid refrigerant is supplied to the electronic expansion valve for heating (EEVH) 15, adiabatically expanded, and then introduced into the outdoor heat exchanger 13 via the sub-cooling coil 14.

In the outdoor heat exchanger 13, heat is exchanged between the coolant and the outside air blown from the outdoor fan 24, and the coolant absorbs the heat from the outside air and is evaporated and gasified. This coolant passes through the four-way selector valve 12 from the outdoor heat exchanger 13, is merged with the refrigerant gas from the sub-cooling heat exchanger 17, and is subsequently introduced into the accumulator 19. In the accumulator 19, the liquid portion contained in the refrigerant gas is separated, and only the gas portion is suctioned into the compressor 10 and once again compressed in the compressor 10. The heating operation is performed by repeating the cycle described above.

In the multi-split air conditioner 1 applied to the air conditioning of a building or the like, the refrigerant piping length between the outdoor unit 2 and the indoor units 3A, 3B is extremely long. As a result, the lubricating oil that has flowed with the coolant from the compressor 10 to the refrigerant cycle (refrigerant circuit) 7 side readily accumulates in the refrigerant cycle (refrigerant circuit) 7, making the air conditioner 10 side prone to oil deficiency. Here, in order to collect the lubricating oil that has flowed from the compressor 10 to the refrigerant cycle (refrigerant circuit) 7 side in the compressor 10, an oil return operation (oil return control) is configured to be performed when a predetermined oil return condition is met as a result of continual operation of the air conditioner 1.

This oil return operation (oil return control) is performed by setting the refrigerant cycle (refrigerant circuit) 7 to a cooling cycle via the four-way selector valve 12 when an oil return control unit 40 provided to an outdoor controller 26 has detected that the oil return condition is met. At that time, the speed of the compressor 10 is increased to a required oil return speed, each of the electronic expansion valves for cooling (EEVC) 31 of the indoor units 3A, 3B is lifted by a set lift amount via the indoor controller 33, and a slight so-called liquid-back operation is performed.

Here, the oil return condition includes one or both of the following:
(A) A continuous operation time or aggregate operation time of the air conditioner 1 is counted, and the value has reached a predetermined time;
(B) A lubricating oil discharge amount from the compressor 10 is calculated, and the value has reached a predetermined amount.

When oil return condition detecting means 41 detects that condition (A) and/or (B) are met, the oil return operation is configured to be performed via the oil return control unit 40. These oil return conditions are conventionally known.

Furthermore, when the oil return operation (oil return control) is started as a result of the above-described conditions, the compressor 10 is in operation at a speed lower than the required oil return speed for the oil return operation as a result of high pressure protection control, current protection control, or the like at high outdoor temperature, for example. If the compressor speed is to be increased in that state, the speed may fail to reach the required oil return speed due to the protection control, causing failure in oil return control and oil return control to be repeated once again after a short period of time.

In the present embodiment, the oil return control unit 40 includes load reducing means 42 attached thereto. When the oil return operation is started in an operational state in which the compressor speed is lower than the required oil return speed due to protection control or the like or when the compressor speed fails to reach the required oil return speed during the oil return operation, the load reducing means 42 is configured to reduce the load by setting at least one of the thermo-ON indoor units 3A, 3B to thermo OFF and perform the oil return operation (oil return control).

The load reducing means 42 of the present embodiment, as illustrated in FIG. 2, performs the following. That is, when the oil return condition is detected by the oil return condition detecting means 41 during the cooling operation in step S1, the flow proceeds to step S2 where the decision is made as to whether high pressure protection control or current protection control is inactive. If the protection control is inactive, the result of the decision is "Yes" and the flow proceeds to step S3. In step S3, the speed of the compressor 10 and the lift amount of each of the electronic expansion valves for cooling (EEVC) 31 are increased to a set speed and a set lift amount, respectively, and the oil return control is then performed. On the other hand, if the protection control is active and the result of the decision is "No" in step 2, the flow proceeds to step S4 where the decision is made as to whether or not the compressor 10 is in operation at a speed greater than or equal to the required oil return speed.

Here, if the decision is made that the compressor speed is greater than or equal to the required oil return speed ("Yes"), the flow proceeds to step S3 where the oil return operation (oil return control) is performed. If the result of the decision is "No," the flow proceeds to step S5 where the load is reduced by setting at least one of the thermo-ON indoor units 3A, 3B to thermo OFF, for example, and then the flow returns to step S1. At this time, in step S1, the regular cooling operation continues for roughly five minutes until the lifts of the electronic expansion valves for cooling 31 of the thermo-ON indoor units 3A, 3B stabilize. Subsequently, the operations of step S2 and thereafter are repeated, and the speed of the compressor 10 is set to the required oil return speed or higher by reducing the load by gradually setting the thermo-ON indoor units 3A, 3B to thermo OFF.

If, as a result of repeating the above, the speed of the compressor 10 is determined to be greater than or equal to the required oil return speed in step S4, the flow proceeds to step S3 where the oil return operation (oil return control) is performed. Note that the oil return operation (oil return control) is performed with the compressor 10 operated at the required oil return speed and the electronic expansion valves for cooling (EEVC) 31 lifted by the required amount, and ends upon a predetermined known operation end condition being met. Upon the end of the oil return operation (oil return control), the flow proceeds to step S6 to return to the regular operation.

Further, at the end of the oil return operation (oil return control), the oil return operation is determined to be "Success" or "Failure" ("Success" when a suction overheating degree SH of the compressor 10 continues for a predetermined period of time at a predetermined value or less, and "Failure" in all other cases or when the oil return speed fails to be reached, for example). When determined to be "Failure," the oil return operation is retried on the basis of preset condition.

According to the configuration described above, the present embodiment has the following actions and effects.

The oil return condition detecting means 41 of the oil return control unit 40 detects that oil return condition is met when the multi-split air conditioner 1 is in cooling operation or heating operation, the oil return control unit 40 sets the refrigerant cycle (refrigerant circuit) 7 to a cooling cycle, and increases the lift amount of the electronic expansion valves for cooling (EEVC) 31 of the indoor units 3A, 3B to the required lift amount by the indoor controller 33 as well as increasing the speed (drive frequency) of the compressor 10 to the required oil return speed, thereby causing the oil return operation (oil return control) to start.

However, when high pressure protection control or current protection control is active or the like at high outdoor temperature, the compressor 10 operates at a speed lower than the required oil return speed. Even if the oil return operation is started in that state, the speed of the compressor 10 fails to increase to the required oil return speed due to the protection control or the like, resulting in failure in the oil return control and a retry operation being repeated. Here, in the present embodiment, when the protection control is active, the decision as to whether or not the speed of the compressor 10 is greater than or equal to the required oil return speed is made. If the decision results in the speed of the compressor 10being less than or equal to the required oil return speed, the oil return operation (oil return control) is started after increasing the compressor speed so as to exceed the required oil return speed by reducing the load by setting at least one of the thermo-ON indoor units 3A, 3B to thermo OFF via the load reducing means 42.

That is, with high pressure protection control or current protection control active at high outdoor temperature, the system can be viewed as a high load operational state, and thus reducing the load by setting at least one of the thermo-ON indoor units 3A, 3B to thermo OFF allows the speed of the compressor 10 to increase in accordance with the amount of the load reduction. As a result, the speed of the compressor 10 can reach the required oil return speed, making it possible to start the oil return operation with the circulation amount and the flow rate of the coolant increased.

Thus, even when the compressor speed is low during the protection control, reducing the load by setting at least one of the thermo-ON indoor units 3A, 3B to thermo OFF via the load reducing means 42 causes the speed of the compressor 10 to increase to exceed the required oil return speed, thereby causing the oil return operation to be performed and achieving oil return control.

This makes it possible to avoid the situation of repeated oil return control caused by failure in oil return control, improve operation efficiency, and ensure air conditioner reliability as well as air conditioning comfort.

Further, the load reducing means 42 is configured to start the oil return operation after reducing the load by setting at least one of the thermo-ON indoor units 3A, 3B to thermo OFF to increase the compressor speed to the required oil return speed or higher when the speed of the compressor 10 is lower than the required oil return speed due to protection control or the like at the start of the oil return operation. Therefore, even when the oil return operation is to be started in an operational state in which the speed of the compressor 10 is lower than the required oil return speed due to high pressure protection control, current protection control, or the like, the oil return operation can be performed after reducing the load by setting at least one of the thermo-ON indoor units 3A, 3B to thermo OFF to increase the compressor speed to exceed the required oil return speed.

This makes it possible to, during the oil return control, reliably reach the required oil return speed, adequately maintain the coolant flow rate and circulation amount required to flush the oil, and thus perform the oil return operation (oil return control), thereby avoiding or reducing repeated oil return control caused by failure in the oil return control.

Furthermore, the load reducing means 42 is configured to perform the retry operation after gradually reducing the load by setting the thermo-ON indoor units 3A, 3B to thermo OFF one by one when the at least one of the thermo-ON indoor units 3A, 3B is set to thermo OFF. Accordingly, when the speed of the compressor 10 fails to reach the required oil return speed and the oil return operation is retried by setting at least one of the thermo-ON indoor units 3A, 3B to thermo OFF, it is possible to achieve the oil return control by gradually reducing the load by setting the thermo-ON indoor units 3A, 3B to thermo OFF one by one and causing the speed of the compressor 10 to reach the required oil return speed while minimizing the number of indoor units 3A, 3B to be set to thermo OFF.

This makes it possible to prevent useless repeated oil return control while suppressing deterioration in the air conditioning feeling.

Further, because, in order to perform the retry operation in a stabilized state, the regular cooling operation is performed for a certain period of time after reducing the load by setting at least one of the thermo-ON indoor units 3A, 3B to thermo OFF, when at least one of the thermo-ON indoor units 3A, 3B is forcibly set to thermo OFF and the oil return operation is to be retried in the next operation, the lifts of the indoor-side expansion valves 31 require stabilization and thus the regular cooling operation is performed during that period of about five minutes, making it possible to stabilize the lifts of the expansion valves 31 and retry the oil return operation smoothly.

### [Second Embodiment]

Next, a second embodiment of the present invention will be described using FIGS. 1, 3, and 4.

While the load reducing means 42 of the above-described first embodiment is configured to start oil return control after reducing the load by sequentially setting at least one of the thermo-ON indoor units 3A, 3B to thermo OFF to increase the compressor speed to the required oil return speed or higher when the compressor speed is lower than the required oil return speed at the start of the oil return operation, a load reducing means 42A of the present embodiment is configured to perform the oil return operation, and if the compressor speed fails to reach the required oil return speed, to perform the retry operation after reducing the load by setting the thermo-ON indoor units 3A, 3B to thermo OFF at a fixed rate. Thus, the functionality is partially different.

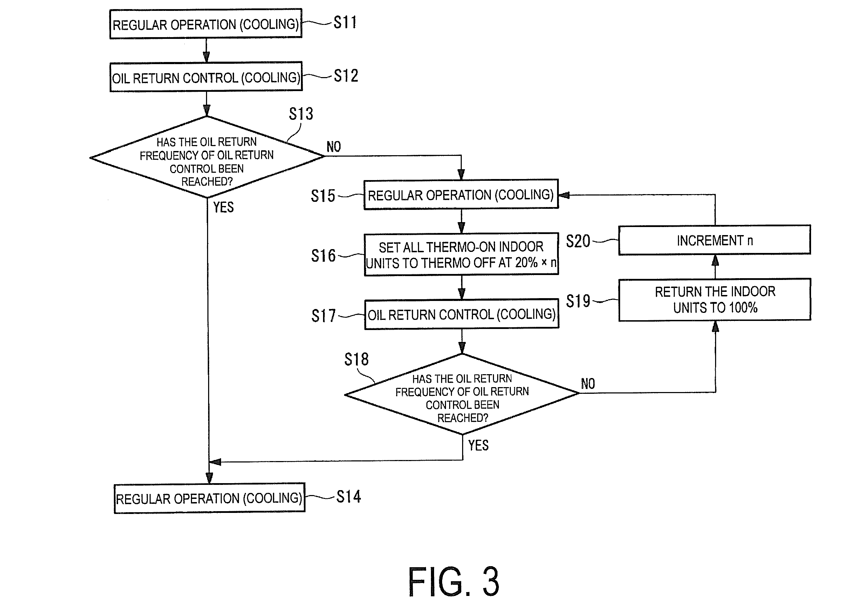

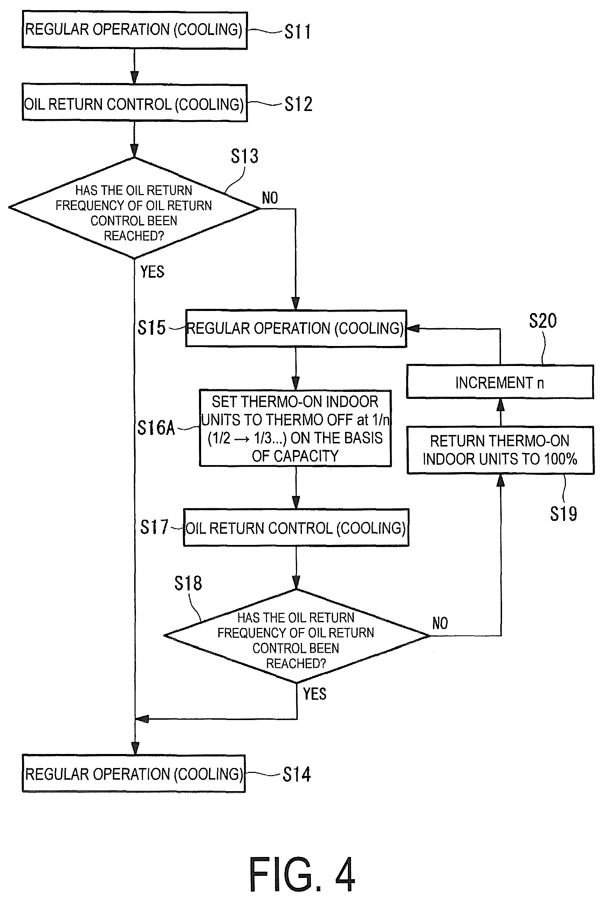

The following describes the functionality of the present embodiment on the basis of the control flowcharts illustrated in FIGS. 3 and 4.

When the oil return condition is detected by the oil return condition detecting means 41 during cooling operation in step S11, the flow proceeds to step S12 where the oil return operation (oil return control) is started. In step S13, the speed of the compressor 10 during this oil return operation (oil return control) is monitored, and a decision is made as to whether or not the required oil return speed has been reached. If the compressor speed has reached the required oil return speed, the oil return control is determined to be a success ("Yes"), and the flow proceeds to step S14 where operation is returned to the regular operational state. On the other hand, when the required oil return speed has not been reached, the result of the decision is "No" the flow proceeds to step S15 where the regular (cooling) operation is performed for about five minutes, the lifts of the indoor-side expansion valves 31 are stabilized, and then the flow proceeds to step S16 or step S16A.

In step S16, in the example illustrated in FIG. 3, a process of reducing the load by setting all the thermo-ON indoor units 3A, 3B, for example, at "20% x n", to thermo OFF is performed. Subsequently, the flow proceeds to step S17 where the oil return operation (oil return control) is performed once again. On the other hand, in step S16A, in the example illustrated in FIG. 4, a process of reducing the load by setting the thermo-ON indoor units 3A, 3B to thermo OFF at, for example, "1/n (1/2 → 1/3...)" on the basis of capacity is performed. Subsequently, the flow proceeds to step S17 where the oil return operation (oil return control) is performed once again.

In step S17, the oil return operation (oil return control) is retried and, in step S18, the compressor speed at the time is monitored and a decision is made as to whether or not the required oil return speed has been reached. If the result of the decision is "Yes" in step S18, the flow proceeds to step S14 to return the regular operational state. If the result is "No", the flow proceeds to step S19. In step S19, after a process of returning the thermo-ON indoor units 3A, 3B to 100% state, the flow proceeds to step S20 where n is incremented, and then returns to step S15. Afterwards, the same operation is repeated.

Accordingly, even when the oil return operation (oil return control) is started in an operational state in which the speed of the compressor 10 is low, resulting in the compressor speed not reaching the required oil return speed, the retry operation is performed after reducing the load by sequentially setting the thermo-ON indoor units 3A, 3B to thermo OFF at a fixed rate via the load reducing means 42A, making it possible to cause the speed of the compressor 10 to reach the required oil return speed, maintain the coolant flow rate and the circulation amount required to flush the oil, and perform the oil return control.

That is, when the oil return operation is started in an operational state in which the speed of the compressor 10 is low due to high pressure protection control, current protection control, or the like at high outdoor temperature, the oil return operation ends without the compressor speed reaching the required oil return speed, resulting in failure in the oil return operation. In this case, the retry operation is to be repeated. However, according to the present embodiment, the retry operation can be performed by reducing the load by setting the thermo-ON indoor units 3A, 3B to thermo OFF at a fixed rate via the load reducing means 42A, allowing the compressor speed to quickly reach the required oil return speed, and thus the oil return control can be performed. This makes it possible to suppress repeated oil return control caused by failure in the oil return control.

Further, when setting at least one of the thermo-ON indoor units to thermo OFF as in the present embodiment, the load is gradually reduced by setting the thermo-ON indoor units to thermo OFF at a fixed rate to perform the retry operation. This configuration allows the speed of the compressor 10 to reach the required oil return speed and the oil return control to be achieved in a lesser number of retries. This makes it possible to prevent useless repeated oil return control while minimizing the number of oil return control retries.

Note that the present invention is not limited to the invention according to the embodiments as described above, and changes can be made as appropriate without departing from the gist thereof. For example, in the above-described embodiment, when the load is to be reduced by setting at least one of the thermo-ON indoor units 3A, 3B to thermo OFF, the indoor units 3A, 3B are sequentially set to thermo OFF one by one or the indoor units 3A, 3B are set to thermo OFF at a fixed rate, such as "20% x n" or "1/n (1/2 → 1/3...)." The present invention, however, is not limited thereto, and needless to say setting to thermo OFF may be performed on the basis of an appropriate quantity, rate, or other method.

### Reference Signs List

1 Multi-split air conditioner
2 Outdoor unit
3A, 3B Indoor unit
7 Refrigerant cycle (refrigerant circuit)
10 Compressor
31 Electronic expansion valve for cooling (EEVC)
40 Oil return control unit
41 Oil return condition detecting means
42, 42A Load reducing means

## Claims

1. A multi-split air conditioner comprising:
one outdoor unit;
a plurality of indoor units connected in parallel to the outdoor unit; and
an oil return control unit that performs an oil return operation when an oil return condition is met by controlling a lift amount of an expansion valve and a speed of a compressor in a cooling cycle, the oil return control unit including load reducing means for performing the oil return operation after reducing a load by setting at least one of the thermo-ON indoor units to thermo OFF when the compressor is in operation at a speed lower than a required oil return speed during the oil return operation.

2. The multi-split air conditioner according to claim 1, wherein
the load reducing means is configured to start the oil return operation after reducing the load by setting at least one of the thermo-ON indoor units to thermo OFF to increase the compressor speed to the required oil return speed or higher when the compressor speed is lower than the required oil return speed due to protection control or the like at the start of the oil return operation.

3. The multi-split air conditioner according to claim 1, wherein
the load reducing means is configured to retry the oil return operation after reducing the load by setting at least one of the thermo-ON indoor units to thermo OFF when the compressor speed fails to reach the required oil return speed during the oil return operation.

4. The multi-split air conditioner according to any one of claims 1 to 3, wherein
the load reducing means is configured to retry the oil return operation after gradually reducing the load by setting the thermo-ON indoor units to thermo OFF one by one when at least one of the thermo-ON indoor units is set to thermo OFF.

5. The multi-split air conditioner according to any one of claims 1 to 3, wherein
the load reducing means is configured to retry the oil return operation after gradually reducing the load by setting the thermo-ON indoor units to thermo OFF at a fixed rate when at least one of the thermo-ON indoor units is set to thermo OFF.

6. The multi-split air conditioner according to claim 4 or 5, wherein
the oil return operation is retried after reducing the load by setting at least one of the thermo-ON indoor units to thermo OFF and performing a regular cooling operation for a certain period of time to stabilize the operation.
